# EUROPEAN PATENT SPECIFICATION

(11) **EP 2 236 978 B1**
(45) Date of publication and mention of the grant of the patent: **18.09.2013**
(21) Application number: 09157091.1
(22) Date of filing: 01.04.2009
(51) Int. Cl.: G01B 11/24, G01B 9/02

(54) **Optical measuring device and method to determine the shape of an object and a machine to shape the object.**
Optische Messvorrichtung und Verfahren zur Bestimmung der Form eines Objekts und eine Maschine zum Formen des Objekts
Dispositif de mesure optique et procédé pour déterminer la forme d'un objet et machine pour former l'objet

(43) Date of publication of application: 06.10.2010
(73) Proprietor: Nederlandse Organisatie voor Toegepast -Natuurwetenschappelijk Onderzoek TNO, 2628 VK Delft (NL)
(72) Inventor: Sandtke, Marijn, 2645 KW Delfgauw (NL); Cheng, Lun-Kai, 2921 GJ Krimpen a/d Ijssel (NL)
(74) Representative: Hatzmann, Martin

(56) References cited:
- WO-A-97/32182
- WO-A-2004/033987
- DE-A1- 19 808 273
- US-A- 6 147 764
- US-A1- 2006 033 925
- US-A1- 2006 103 850
- US-A1- 2008 174 785

## Description

The present invention relates to an optical measuring device for measuring the shape of a tangible object. This optical measuring device comprises an optical probe for guiding light towards a surface of the tangible object and for receiving diffusely reflected light from the surface. The optical measuring device further comprises a distance measuring unit for measuring a distance of the probe to the surface, and a processing unit for deriving the shape of the object from the measured distance,

The present invention also relates to a method for measuring the shape of a tangible object comprising the steps of guiding light towards a surface of the object and receiving diffuse reflected light from the surface.

The present invention in addition relates to a tooling machine for shaping the surface of a tangible object.

The present invention may be used, for example, in the field of manufacturing optical objects.

### State of the art

Manufacturing of curved, aspherical and freeform optics requires corrective techniques like computer numerical controlled (CNC) diamond turning, CNC polishing (deterministic polishing) and other working and modelling techniques. Those techniques require the input of the deviation between the required outer surface shape and the actual shape of the object. An error map describing this deviation can be obtained by measuring the surface shape with a metrology instrument. Several techniques are known, such as optical methods and co-ordinate machines. A disadvantage of a co-ordinate machine is that the measuring probe or stylus has to make mechanical contact with the surface under measurement. Such a contact is undesired for optical surfaces because such mechanical contact might damage the surface, the probe is prone to wear and the probe hinders the tool working the object. In addition, the speed of measuring is small compared to optical methods.

The optical methods comprise methods that are based on measuring the intensity and the direction of a light bundle reflected at the surface and they also comprise methods measuring the path length of the light to the surface. Conventional optical fibres are used both to emit the light towards the reflecting surface and to detect the light reflected at that surface. Typical distances that can be measured by the methods based on measuring the reflected light intensity are in the order of magnitude of millimetres, whereas the accuracy of such methods is typically in the order of micrometers and at best hundreds of nanometres.

Other optical methods comprise methods of using an interferometer that determine the variations in path length difference of the light in a so-called measuring leg comprising a plane reflecting mirror surface and the light in a reference leg comprising a reference mirror. An interferometer comprises a coherent light source (usually a laser) and a detector for detecting the interference of the light reflected by a reference mirror and the light reflected by a second reflecting surface. This interference allows measuring a distance to the surface of an object very accurately. By using a two-dimensional detector array to measure the interference pattern, an interferometer can be constructed for measuring the shape or, to some extent, the roughness of a surface. Methods using an interferometer have an accuracy well below the wavelength of the light used, viz. in the order of magnitude of nanometres. Therefore, interferometers are used for measuring the shape of high quality optical surfaces, in particular flat or spherical surfaces. For single point measurement, the interferometer may comprise optical fibres for guiding the light from the laser or to the detector.

A disadvantage of using an interferometer is that only distances, or more in particular the height variations of the surface in a direction that is in parallel with the axis of the interferometer, viz. the direction of the measuring light beam, can be measured. For this reason the interferometer or the optical probe guiding the light to and from the surface has to be positioned perpendicularly or nearly perpendicularly to the surface to be measured. In the state of the art it is taken for granted that the surface must be a mirror. When the interferometer is used to determine the shape of a three dimensional non-flat, tilted or freeform surface, the interferometer (or the object) has to be moved by a complicated stage having six degrees of freedom to allow a proper measurement, viz. three translations and three rotations. International patent application WO2005/031255 discloses such an optical surface measuring apparatus and method for measuring a surface shape.

For measuring the shape of a non-flat or tilted surface that has to be machined, the optical probe has to be positioned independently of the cutter, chisel, polishing tool or other tool used for machining the surface of the object. Whereas most of the tools (for instance the spindle holding the cutter) have to be positioned perpendicular to the surface, it is not possible to measure the shape at the position of the working area of the tool. Therefore, the object has to be transferred to a measuring position, which transfer introduces inaccuracies between the actual shape and the measured shape.

United States patent US 5,410,410 discloses a non-contact type of measuring device for measuring the three dimensional shape of an object using an optical probe. In particular, this patent discloses a device that allows the measurement of the shape of surfaces that are tilted or curved. The optical probe of this known device comprises a central illumination fibre for emitting light towards a surface of the object to be measured and which illumination fibre is surrounded by eight measuring fibres for receiving light reflected by the surface. The distance between the probe and the surface is derived from the total intensity detected by the receiving fibres. The tilt, inclination or curvature of the surface is derived from the relative intensity detected by the different receiving fibres. The measured intensity is composed of the specular component of the reflected light beam and the diffuse component originating from the scattering of the incident light beam at the surface. Typically the distance between the probe and the surface is in the order of magnitude of millimetres. This known device faces the problem that the distance is not measured properly in the case that the intensity of the light is reduced due to for instance contamination in the air or on the surface under measurement. Also variations in the intensity of the light source will result in an inaccurate measurement of the distance between the probe and the surface. In addition, this device has the disadvantage common to this type of optical devices that the accuracy is not better than in the order of micrometers.

It is known that using a lens in an interferometer to focus the light on a test surface will result in an interferometer that is, to a certain extent, tolerant to angular misalignment due to a tilt angle between the optical axis of the interferometer and a plane mirror test surface. In the known set-up as described in B.W. Hoogenboom et al., A Fabry-Perot interferometer for micrometer-sized cantilevers, Applied Physics Letters vol. 86, 074101 (2005), a single-mode optical fibre with a core of 5 micrometer and a focussing lens, the allowed misalignment was observed to be almost 10 degrees at most. The focussing lens between the tilted reflecting surface (in this case the cantilever of an atomic force microscope) limits the working distance to about one millimetre between the far end of the optical fibre and the surface. The larger the distance, the larger the working distance of the lens has to be. The working distance of the lens has to be chosen in a way that the specular reflected light is received by the lens. An even more complicated aspect of this known set-up to measure the distance to a tilted surface is that each working distance requires a different lens. So, the use of this principle is limited to applications in which there is almost no variation of the distance between the fibre and the surface, like for instance in an atomic force microscope. It is not possible to measure a strongly varying shape of a macroscopic surface.

DE19808273 discloses an interferometric measuring device. The device has measuring probes linked to a modulation interferometer by optical fibres. A first optical fibre is coupled to a measuring probe that is used to obtain reflection from a surface of an object to be measured. A second optical fibre is coupled to a measuring probe that is used to obtain reflection from a table on which the object is located. This used to make it possible to use the probe remote from the interferometer, so that it is possible to measure surfaces that are hard to access. A conventional Mach-Zehnder interferometer is used. Temporally briefly coherent wideband radiation from a spatially coherent beam generating unit is used, which facilitates determination of the profile of rough surfaces.

### Summary of the invention

It is an objective of the present invention to provide an optical measuring device for measuring the shape of a tangible object that is very accurate in its measurement of the shape and that is very easy to construct. This objective of the invention is obtained by an optical measuring device as set forth in claim 1. The objective of the invention is further obtained by a distance measuring unit comprising a fibre interferometer for measuring the optical path length between the probe and the surface of the tangible object.

The effect of the interferometer is that path length differences and thus variations in the shape of the object can be measured that can be less than one nanometre, viz. in the sub-nanometre range. One of the advantages of an interferometer over other optical devices like those that are based on intensity measurement is that, using a proper configuration, the accuracy is not susceptible to contamination of the surface or in the air, nor to for instance variations in the colour of the surface. More in particular, it is an advantage of the fibre interferometer used comprising a threeway coupler, being not prone to intensity variations that are not related to variations in path lengths, for instance variations of the intensity of the light source.

The effect of the single mode optical fibre is that such an optical probe allows to measure optical path length difference even if the reflected light is diffusely reflected at the surface. The advantage of this property is that the optical probe, viz. the fibre, and the surface under measurement need not to be positioned perpendicular to each other. As a consequence, there is no need for complicated manipulations of either the probe or the object during measurement.

By combining the interferometer and the single mode optical fibre an optical measuring device is obtained that is both very accurate and need not to be placed perpendicular the surface under measurement.

It is another objective of the present invention to provide an easy and accurate method for measuring the shape of a tangible object. This objective of the invention is obtained by the method of claim 7. The single mode optical fibre allows distance measurement using non-specular, diffuse reflected light besides using specular 25 reflected light. The advantage of this property is that the optical probe, viz. the fibre and the object have only to be positioned or to be moved with a limited degrees of freedom relative to each other. This results in a less complicated construction and therefore in a higher accuracy of the shape measurement.

It is also an objective of the present invention to provide a tooling machine for shaping the surface of a tangible object, which tooling machine allows an accurate shaping of the object and which tooling machine is easy to construct. This objective of the invention is obtained by a tooling machine comprising an optical measuring device according to the invention. The effect of using this optical measuring device is that the shape of the surface can be measured with high accuracy and that the measuring device does not or hardly hinder the tool used for shaping the object.

The method according to the invention comprises the use of a single mode fibre as a wave front filter to prevent light that is scattered from the non-mirror target in a direction not being parallel to the incident light beam, being coupled into the single mode fibre and hence to interact with the reference light beam. The single mode fibre will eliminate the distortion in the wave front of the sensing beam caused by that scattering or by diffraction. Only light that matches with the fundamental mode of the fibre will be transported by the single mode fibre and used to generate the interferometric signal by interaction with the reference beam. The diffracted or scattered light that does not match with the fundamental mode of the fibre will have an extreme high attenuation and hence will not pass the single mode fibre. In a conventional interferometer with common bulk optical components, the Gaussian-like mode profile at the output of the single mode fibre can be converted by a lens into a perfect wave front of the light beam used in combination with the reference beam for the generation of the interference signal which enables measuring the shape of the object. The conventional interferometer with bulk optical components can be replaced by fibre optical components having the same functionality.

### Brief description of the figures

- Figure 1: shows an optical measuring device for measuring the shape of a tangible object according to the state of the art.
- Figure 2: illustrates the working principle of an optical measuring device according to the invention.
- Figure 3: shows a preferred embodiment of a tooling machine for relatively flat surfaces like freeforms, comprising the optical measuring device according to the invention that is preferred.
- Figure 4: shows a preferred embodiment of a tooling machine for relatively strong curved surfaces, comprising the optical measuring device according to the invention that is preferred.
- Figure 5: shows the fibre interferometer, being a 3x3 fibre interferometer.
- Figure 6: shows an experimental set-up used to elucidate the working principle of the invention.
- Figure 7: shows the results obtained by two experiments using the experimental setup of figure 6.

### Detailed description the figures

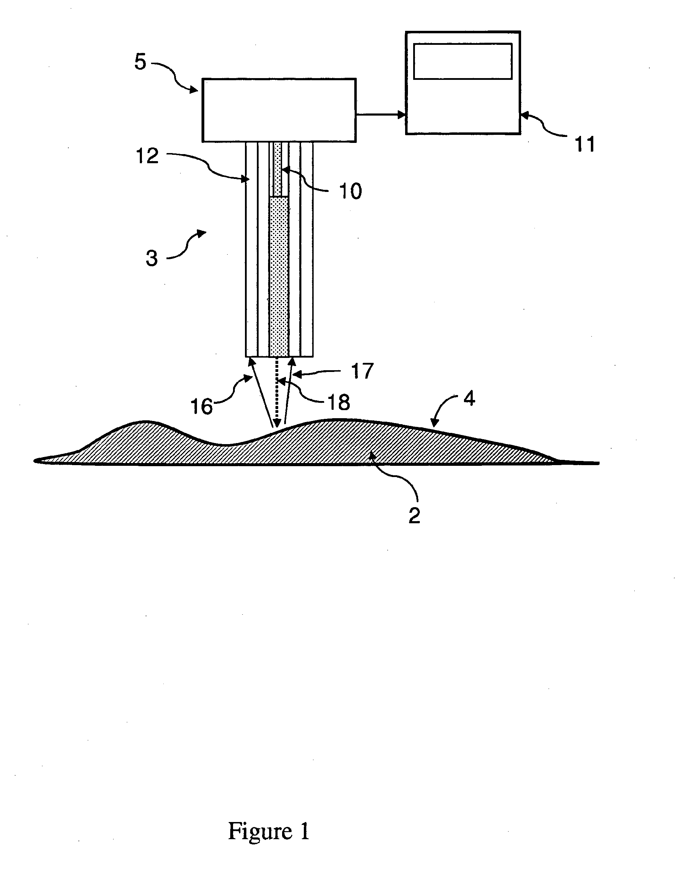

Figure 1 shows an optical measuring device for measuring the shape of a tangible object (2) according to the state of the art (US 5,410,410). This known device comprises an optical probe (3) for guiding a beam of light (18) towards a surface (4) of the object (2) via an illumination fibre (10) and it comprises receiving fibres (12) for receiving reflected light from the surface (4). The optical probe is connected with a distance measuring unit (5) comprising a probe head and a photo-electric conversion circuit to provide the processing unit (11) with a proper signal for deriving the shape of the object. The reflected light comprises diffuse reflected light (17) and specular reflected light (16). The light from a light source, for instance a light emitting diode, is directed towards the surface by the illumination fibre. A part of the light that is reflected by the surface is received by the light receiving elements inside the measuring unit via the receiving fibres for further processing.

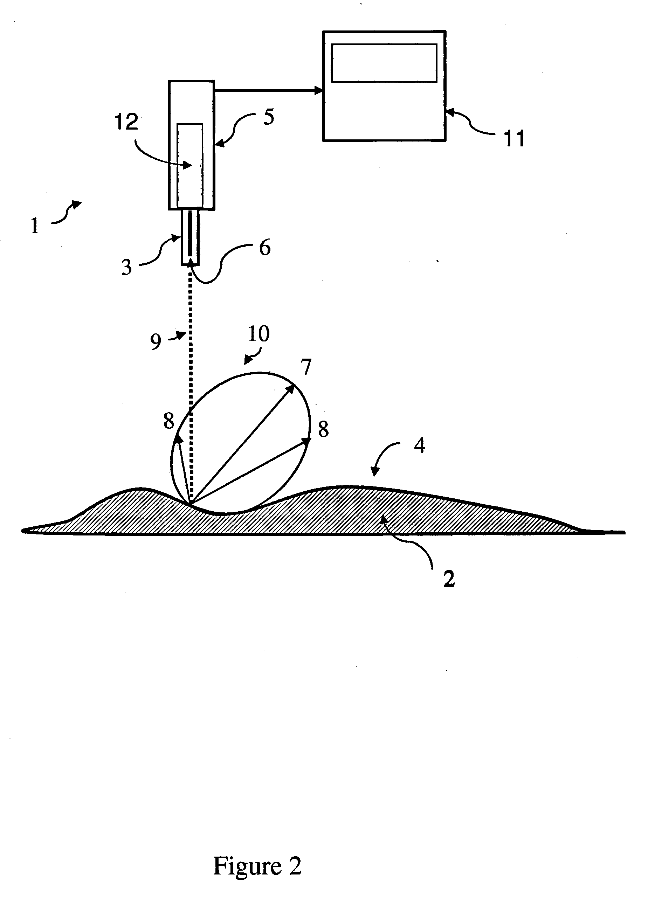

Figure 2 illustrates the working principle of the optical measuring device (1) according to the invention. A coherent light beam (9), usually a laser of an interferometer (12), is guided towards the surface (4) of a tangible object (2) by an optical probe (3). The light reflected from the surface consists of specular reflected light (7) and non-specular, diffuse reflected or scattered light (8). For specific objects, in particular objects with a periodic surface structure like gratings, this diffuse reflected light might be diffracted light. The ellipse (10) representing the intensity and direction of the reflected light is used only for illustration. A part of the reflected light is received by the single mode optical fibre (6) of the optical probe and guided towards the distance measuring unit (5) comprising the interferometer (12), to measure the distance towards the surface. It is known to those skilled in the art how a path length difference as measured by an interferometer has to be converted into a distance or a distance variation, taking into account the geometry and the used optical components. The distance measuring unit is connected with the processing unit (11) to provide the processing unit with the proper signal for deriving the shape of the object. The connection between the measuring unit and the processing unit can be any type of connection suited to transfer a signal. Examples of connections are wires for transfer of electrical signals, fibres for transfer of optical signals or wireless connections for transfer of electromagnetic signals like infra-red signals.

Those skilled in the art will appreciate that the intensity of the light reflected in a certain direction depends on surface conditions like the roughness and the reflectivity of the material for the wavelength used. Which part of the reflected, scattered or diffracted light is received by the optical probe further depends on the shape of the object, the angle at which the light is guided towards the surface, and the angle of acceptance of the optical probe, viz. the numerical aperture of the optical components used to receive the reflected light. In general only diffuse reflected light will be received by the optical probe according to the invention in situations where the surface is curved or tilted, but for certain geometries also the specular reflected light can be received by the optical probe. Although the measuring device according to the invention is in particular suited for measuring the shape of curved surfaces, it can also be applied for flat objects that are tilted with respect to the light beam falling on the surface of the object. It is an advantage of the invention that measurements can be performed at all types of surface showing any diffuse reflection and that variations in the shape of the object can be measured that can be less than one nanometre, viz. in the sub-nanometre range.

Figure 2 is only a schematic presentation of the invention. So are for example optional lenses at the far end of the optical fibre omitted in the figure. Whereas the invention is based on the insight that non-specular reflected light is used to measure path lengths with an interferometer using a single mode optical fibre, it has to be emphasized that this does not exclude also measuring the path length with the specular reflected beam. In particular it is appreciated that during measuring the shape of an object there will be moments in time and positions on the surface for which the specular component of the reflected light is used to measure the shape.

In a very simple embodiment of the invention, the object can be placed at different positions relative to the optical probe by hand to measure the distance and thus the shape of the object. In another embodiment the optical measuring device comprises a plurality of optical probes to measure the shape. This might be either probes configured in a line to provide an optimum geometry for scanning along the surface or a matrix of probes to measure the shape of the object or a part of the object without the need of moving the probes and the object with respect to each other. In a further embodiment either the probe or the object is fixed to an automated manipulating apparatus comprising an electronic circuit that provides the processing unit with data that are representative for the relative position of the probe and the object.

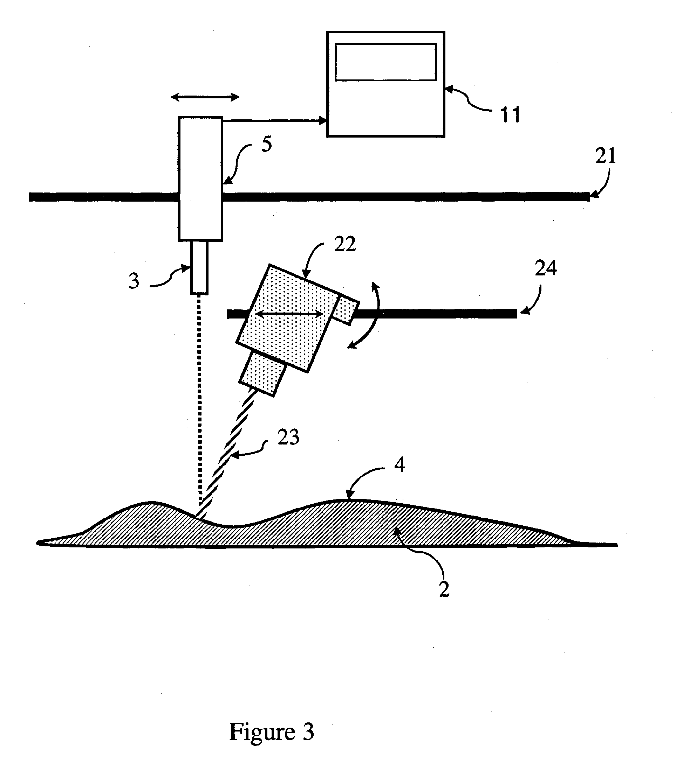

Figure 3 shows an embodiment of the invention that is preferred for relatively flat or mildly curved surfaces like aspheric surfaces and freeforms. In particular this figure shows an embodiment of a tooling machine comprising the optical measuring device according to the invention. The distance measuring unit (5) is placed on a fixed slide (21) of the tooling machine being a diamond turning machine, a robot polisher or any other surface generating machine, to position the probe. The distance measuring unit may have one or more degrees of freedom for positioning or moving relative to the slide. Although it is preferred that the distance measuring unit is fixed to a slide or stage with a limited degree of freedom, the measuring unit might also have all degrees of freedom to be positioned independently of the tool holder (22) and the object (2). A relative movement or positioning of the tool holder, distance measuring device, object, and slides or stages includes all movements of the separate parts and combined movements of one or more of the parts. This allows for instance manipulating the object, only.

The tool holder (22) with the tool (23) for working the surface (4) is mounted on a tooling stage (24) that has the required degrees of freedom, usually six, to allow a perpendicular positioning of the tool with respect to the surface. The tool might be any type of tool suited to remove material from the object, including cutting, milling, grinding and polishing tools or to add material, including printing and rapid manufacturing techniques. The tool holder is suited for holding and driving the tool and the holder will usually comprise a motor and an electrical circuit for control purposes. In this embodiment of the invention, the optical measuring device will measure a shape without being subject to systematic errors of the tooling machine, the wear of the cutter, chisel, polishing tool or other tool used for shaping the object. Shaping according to the invention is any technique to machine the surface by removing material, including polishing, to add material for instance by printing or to deform the object. More-over it is appreciated that the tool, tool holder and tooling slide can be omitted if only the shape has to be measured.

This embodiment is in particular suited for surfaces that are nearly flat, like aspherical and freeform optical components to be used as a mirror or lens. Freeform objects are typically optical objects with a smoothly varying surface, not having the rotational symmetry of conventional optical products like lenses and mirrors. Typically, the direction of the vector normal to the surface varies not more than five degrees along the surface. For such a nearly flat object, the object need only to be translated (or rotated along one axis) and thus reducing the number of degrees of freedom and consequently reducing the complexity and inaccuracy of the machine. Here nearly flat means that the maximum angle of curvature is such that the incident beam can reach each part of the surface to be measured and that a part of the diffusely reflected light can enter the optical probe. However, in cases where the object has been mounted such that it has six degrees of freedom, the part of the surface to be measured can be placed in a proper position for an optimal measurement.

In figure 3, the distance measuring unit (5) is placed on the slide (21). In another embodiment, however, only the optical probe (3) is fixed on the slide. In such an embodiment the distance measuring unit comprising the interferometer can be placed inside or outside the tooling machine, the light being guided to and from the interferometer by the optical fibre. With the device according to this embodiment, only a translation is required, no rotation is needed for surfaces that are not too strongly curved, like freeforms with an undulate surface. As a consequence, the mechanical inaccuracies will be less and the positioning part of the measuring device is less complicated and therefore cheaper to manufacture. More in particular, a very stiff construction can be realised, which construction further increases the accuracy of the measurement and consequently the accuracy of the shape of the worked object.

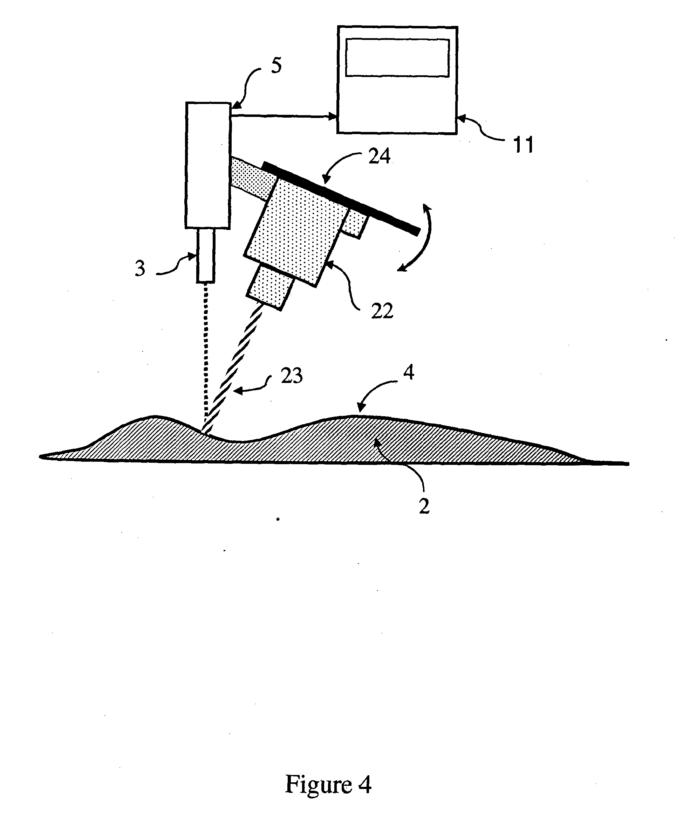

Figure 4 shows an embodiment of the invention that is preferred for strongly curved surfaces. Both the distance measuring unit (5) and the tool holder (22) are placed on the same stage (24) with the required degrees of freedom. Or, in other words, the distance measuring unit comprising the interferometer is mechanically coupled to the tool holder. In this embodiment the angle between the tool holder and the optical axis of the interferometer is fixed and no additional slide for the distance measuring unit is required. The advantage of this particular embodiment is that its use is not limited to nearly flat objects; the angle between the light beam and the normal vector of the surface is constant during the measurement. The tool holder might be fixed to the stage or it might have one or even more degrees of freedom with respect to the interferometer.

A particular favourable embodiment is the one where not the distance measuring unit or the interferometer are fixed to the stage or tool but only the optical probe (3). In this particular embodiment the optical probe is connected with the interferometer by an optical fibre. An advantage is that the probe has a low weight and needs very little space allowing fast and unhindered movements.

In the figures 3 and 4 the optical measuring device and the tool holder are placed in the same piece of equipment, the tooling machine. However, it is appreciated that the optical measuring device can be used as a stand alone device being placed inside the tooling machine. The stand alone measuring device can also be used in combination with a tooling machine, either in the same piece of equipment or apart from it.

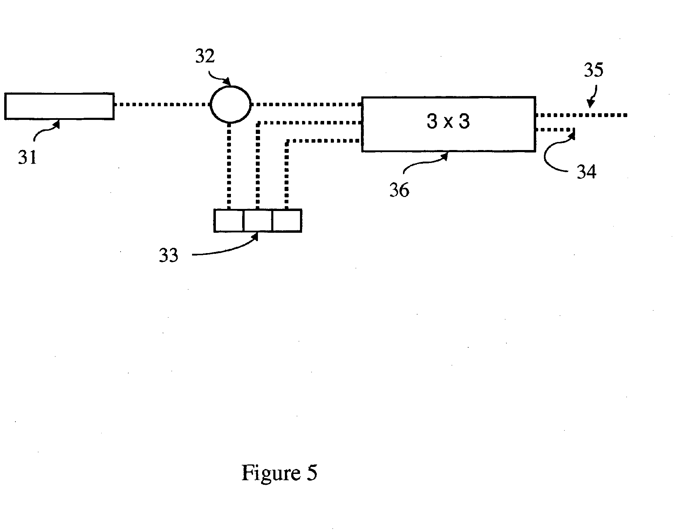

From the international patent publication WO 2004/033987 A1 a device for measuring an optical path length difference is known. More in particular this known application discloses the use of three optical fibres and a three-way coupler (3x3 coupler) to eliminate the effect of the amplitude ratio of the light components on the measurement of the path length difference. The interferometer used, shown in Figur 5, is referred to as a 3x3 fibre interferometer and comprises a laser (31) as a coherent light source, a circulator (32) to prevent the light coming from the laser going directly to the detector (33), a three-way coupler (36), a reference fibre (34) and a detector (33). The interferometer measures the path length difference between the light reflected at a reference mirror, which reference mirror is preferably directly attached to the fibre, and the light travelling along the signal or sensing fibre (35) to and from the surface under measurement. Although it is preferred to have a mirror directly attached to the reference fibre, also internal reflections coming from a cleaved surface of the fibre can be used.

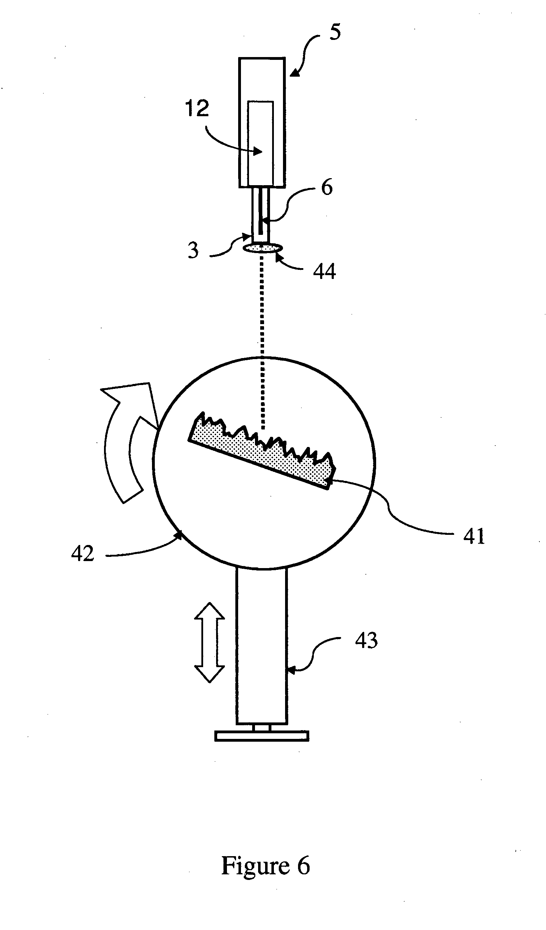

Figure 6 shows an experimental set-up used to elucidate the invention. This experimental set-up comprises a distance measuring unit (5) and the interferometer (5). A sample of brushed aluminium (41) is placed on a rotatable holder (42) and a micrometer (43) is used for adjusting the position of the sample relative to the optical probe (3), manually. The roughness of the sample is exaggerated in the figure for illustration purpose. A sensing optical fibre (6) being a part of the optical probe (3) comprising a lens (44) guides the light towards the sample surface and guides the reflected light back towards the interferometer.

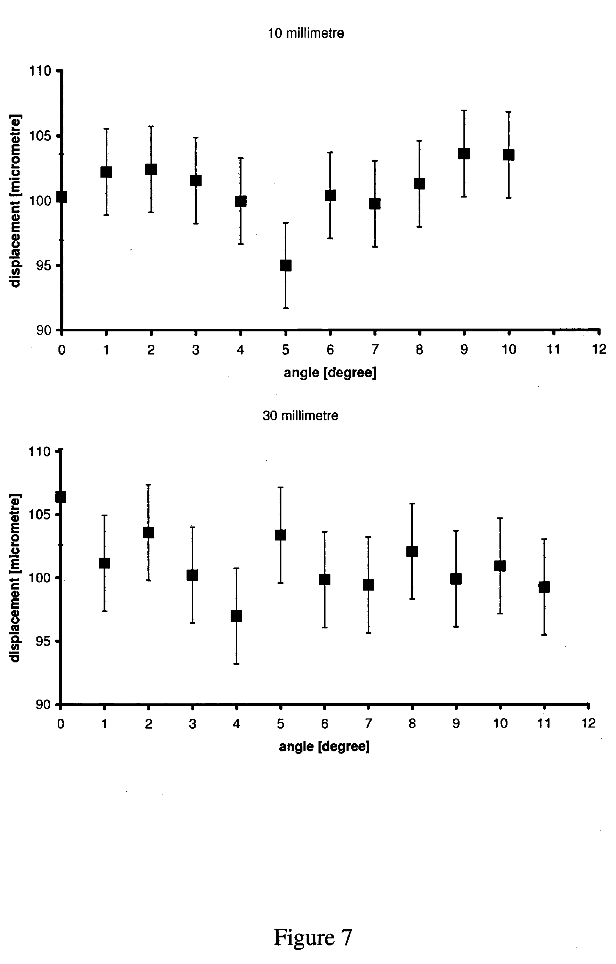

Figure 7 shows the results obtained by two experiments using the set-up of figure 6. In the first experiment the sample of brushed aluminium was placed at a distance of about 10 millimetres from the far end of the sensing optical fibre, whereas for the second experiment the distance was about 30 millimetres. These distances are just an illustration. In practise these distances can range from micrometres to tens of metres. For application in tooling machines, however, preferably these distances will be between a millimetre and ten centimetres. For each tilt angle of the sample (horizontal axis in figure 7) the sample was displaced 100 micrometre with a micrometer, manually. Figure 7 shows the displacement as measured by the interferometer as a function of the tilt angle. In this particular experiment, no specular reflected light could be received by the fibre because the numerical aperture of the lens placed at the far end of the fibre was too low. It has to be emphasized that the device according to the invention can also be used to measure the distance using specular reflected light. The spread in the measured distance represents the inaccuracy of the manual displacement, being a few percent. The error bars in the figure should not be confused with the accuracy of the optical measuring device which is orders magnitude better. For these specific experiments the maximum tilt angle was about 10 degrees. This maximum tilt angle depends on the numerical aperture of the fibre and in the common set-up with a lens placed at the far end of the fibre, on the lens used. It has also been observed that this maximum angle of acceptance also depends on the characteristics of the surface, viz. the roughness.

The present invention works best when the light is diffuse reflected from surface. It has to be realized, however, that even mirrors have some surface roughness and thus will scatter a part of the incident light. This property of most of the mirrors available in practise allows measuring the shape of mirror-like surface. Therefore, the optical device according to the invention will be applicable for most mirrors, lenses and other optical and non-optical elements. In specific cases, however, the surface to be measured need not be the surface of the final object. In such very specific cases a temporary thin layer may be applied to the surface to allow a proper measurement of the shape. Such a layer might consist of small particles, for instance carbon black powder.

Those familiar with the daily practice in a workshop will appreciate that the present invention allows to take into account and measure not only the wear of the tool used to shape the object but also the inaccuracy of the stages used to manipulate and machine the object. This advantage is obtained by using a stiff and temperature independent construction for bearing and translating the probe whereas the tool and the object can be manipulated in all degrees of freedom to shape the object.

It will be understood by those skilled in the art that the present invention is not limited to the embodiments illustrated above and that many modifications and additions may be made without departing from the scope of the invention as defined in the appending claims.

## Claims

1. An optical measuring device (1) for measuring the shape of a tangible object (2), comprising
- an optical probe (3) arranged to guide light towards a surface (4) of the tangible object and arranged to receive diffusely, non-specularly reflected light (8) from the surface,
- a distance measuring unit (5) arranged to measure a distance of the probe to the surface, and
- a processing unit (11) arranged to derive the shape of the object from the measured distance, wherein
- the optical probe (3) comprises a single mode optical fibre (6) arranged to guide the light towards the surface and arranged to receive the diffusely reflected light from the surface, and wherein
- the distance measuring unit (5) comprises a fibre interferometer (12), **characterized in that**
the fibre interferometer (12) comprises a coherent light source (31), a circulator (32) coupled to the coherent light source (31), a three-way coupler (36) coupled to the circulator (32), a detector (33) coupled to the circulator (32), the circulator (32) being configured to prevent the light coming from the coherent light source (31) to go directly to the detector (33), the fibre interferometer (12) furthermore comprising a reference fiber (34) and a sensing fiber (35) coupled to the three-way coupler (36), wherein
- the fibre interferometer (12) measures a path length difference between the light reflected at a reference mirror and the light travelling along the sensing fibre (35) to and from the surface (4) of the tangible object, and wherein
- the three-way coupler (36) is arranged for eliminating the effect of an amplitude ratio of the light components on the measurement of the path length difference.

2. An optical measuring device according to claim 1, wherein the optical probe comprises a lens (44) arranged to guide the light towards the surface and to guide the reflected light back towards the fibre interferometer.

3. An optical measuring device according to any of the preceding claims, wherein the optical probe is fixed to a manipulator for moving relative to the object.

4. A tooling machine for shaping the surface of a tangible object **characterized in that** the machine comprises an optical measuring device (1) according to any of the preceding claims.

5. A tooling machine according to claim 4, wherein the machine is a diamond turning machine, a robot polisher or any other surface generating machine for removing material.

6. A tooling machine according to claim 4 wherein the machine is a printer or any other surface generating machine for adding material.

7. A method for measuring the shape of a tangible object (2) comprising the steps of guiding light towards a surface (4) of the object and receiving diffuse, non-specularly reflected light from the surface
wherein the light is received by a single mode optical fibre and in that the received light is
guided towards a fibre interferometer, **characterized in that**
the fibre interferometer (12) comprises a coherent light source (31), a circulator (32) coupled to the coherent light source (31), a three-way coupler (36) coupled to the circulator (32), a detector (33) coupled to the circulator, the circulator (32) being configured to prevent the light coming from the coherent light source (31) to go directly to the detector (33), the fibre interferometer (12) furthermore comprising a reference fiber (34) and a sensing fiber (35) coupled to the three-way coupler (36), the method comprising
- using the fibre interferometer (12) to measure a path length difference between the light reflected at a reference mirror and the light travelling along the sensing fibre (35) to and from the surface (4) of the tangible object, and
- eliminating the effect of an amplitude ratio of the light components on the measurement of the path length difference using the three-way coupler (36)

8. A method according to claim 7, wherein the optical fibre and the object are moved relative to each other.

## Patentansprüche

1. Optische Messvorrichtung (1) zum Messen der Form eines greifbaren Objekts (2), umfassend
- eine optische Sonde (3), angeordnet, um Licht auf eine Oberfläche (4) des greifbaren Objekts zu lenken, und angeordnet, um diffus, nicht gerichtet reflektiertes Licht (8) von der Oberfläche zu empfangen,
- eine Abstandsmessvorrichtung (5), angeordnet, um einen Abstand der Sonde zu der Oberfläche zu messen, und
- eine Verarbeitungsvorrichtung (11), angeordnet, um die Form des Objekts von dem gemessenen Abstand abzuleiten, wobei
- die optische Sonde (3) eine optische Single Mode Faser (6) umfasst, angeordnet, um das Licht zur Oberfläche zu lenken, und angeordnet, um das diffus reflektierte Licht von der Oberfläche zu empfangen, und wobei
- die Abstandsmessvorrichtung (5) ein Faser-Interferometer (12) umfasst,
**dadurch gekennzeichnet, dass**
das Faser-Interferometer (12) eine kohärente Lichtquelle (31), einen Zirkulator (32), gekoppelt an die kohärente Lichtquelle (31), einen Dreiwegekoppler (36), gekoppelt an den Zirkulator (32), einen Detektor (33), gekoppelt an den Zirkulator (32) umfasst, wobei der Zirkulator (32) konfiguriert ist, um zu verhindern, dass das Licht, das von der kohärenten Lichtquelle (31) kommt, direkt zu dem Detektor (33) geht, wobei das Faser-Interferometer (12) ferner eine Referenzfaser (34) und eine Tastfaser (35), gekoppelt an den Dreiwegekoppler (36) umfasst, wobei
- das Faser-Interferometer (12) eine Weglängendifferenz zwischen dem Licht, reflektiert an einem Referenzspiegel, und dem Licht, das sich entlang der Tastfaser (35) zu und von der Oberfläche (4) des greifbaren Objekts bewegt, misst, und wobei
- der Dreiwegekoppler (36) angeordnet ist, um die Wirkung eines Amplitudenverhältnisses der Lichtkomponenten auf die Messung der Weglängendifferenz zu eliminieren.

2. Optische Messvorrichtung nach Anspruch 1, wobei die optische Sonde eine Linse (44) umfasst, angeordnet, um das Licht zu der Oberfläche zu lenken und das reflektierte Licht zurück zu dem Faser-Interferometer zu lenken.

3. Optische Messvorrichtung nach einem der vorhergehenden Ansprüche, wobei die optische Sonde an einem Manipulator zum Bewegen relativ zu dem Objekt befestigt ist.

4. Werkzeugmaschine zum Formen der Oberfläche eines greifbaren Objekts, **dadurch gekennzeichnet, dass** die Maschine eine optische Messvorrichtung (1) nach einem der vorhergehenden Ansprüche umfasst.

5. Werkzeugmaschine nach Anspruch 4, wobei die Maschine eine Diamantdrehmaschine, ein Schleifroboter oder eine andere oberflächenerzeugende Maschine zum Entfernen von Material ist.

6. Werkzeugmaschine nach Anspruch 4, wobei die Maschine ein Drucker oder eine andere oberflächenerzeugende Maschine zum Hinzufügen von Material ist.

7. Verfahren zum Messen der Form eines greifbaren Objekts (2), umfassend die Schritte, in denen Licht zu einer Oberfläche (4) des Objekts gelenkt wird und diffuses, nicht gerichtet reflektiertes Licht von der Oberfläche empfangen wird,
wobei das Licht eine durch eine optische Single Mode Faser empfangen wird und das empfangene Licht zu einem Faser-Interferometer gelenkt wird, **dadurch gekennzeichnet, dass**
das Faser-Interferometer (12) eine kohärente Lichtquelle (31), einen Zirkulator (32), gekoppelt an die kohärente Lichtquelle (31), einen Dreiwegekoppler (36), gekoppelt an den Zirkulator (32), einen Detektor (33), gekoppelt an den Zirkulator (32) umfasst, wobei der Zirkulator (32) konfiguriert ist, um zu verhindern, dass das Licht, das von der kohärenten Lichtquelle (31) kommt, direkt zu dem Detektor (33) geht, wobei das Faser-Interferometer (12) ferner eine Referenzfaser (34) und eine Tastfaser (35), gekoppelt an den Dreiwegekoppler (36) umfasst, wobei das Verfahren folgendes umfasst:
- Verwendung des Faser-Interferometers (12) zum Messen einer Weglängendifferenz zwischen dem Licht, reflektiert an einem Referenzspiegel, und dem Licht, das sich entlang der Tastfaser (35) zu und von der Oberfläche (4) des greifbaren Objekts bewegt, und
- Eliminieren der Wirkung eines Amplitudenverhältnisses der Lichtkomponenten auf die Messung der Weglängendifferenz unter Verwendung des Dreiwegekopplers (36).

8. Verfahren nach Anspruch 7, wobei die optische Faser und das Objekt relativ zueinander bewegt werden.

## Revendications

1. Dispositif de mesure optique (1) pour mesurer la forme d'un objet tangible (2), comprenant
- une sonde optique (3) agencée pour guider de la lumière vers une surface (4) de l'objet tangible, et pour recevoir la lumière réfléchie de manière diffuse et non spéculaire (8) à partir de la surface,
- une unité de mesure de distance (5) agencée pour mesurer une distance de la sonde à la surface, et
- une unité de traitement (11) agencée pour déduire la forme de l'objet à partir de la distance mesurée, dans lequel
- la sonde optique (3) comprend une fibre optique monomode (6) agencée pour guider la lumière vers la surface, et pour recevoir la lumière réfléchie de manière diffuse à partir de la surface, et dans lequel
- l'unité de mesure de distance (5) comprend un interféromètre à fibre (12), **caractérisé en ce que**
l'interféromètre à fibre (12) comporte une source de lumière cohérente (31), un circulateur (32) couplé à la source de lumière cohérente (31), un coupleur à trois voies (36) couplé au circulateur (32), un détecteur (33) couplé au circulateur (32), le circulateur (32) étant configuré pour empêcher la lumière provenant de la source de lumière cohérente (31) d'aller directement vers le détecteur (33), l'interféromètre à fibre (12) comportant en outre une fibre de référence (34) et une fibre de détection (35) couplées au coupleur à trois voies (36), dans lequel
- l'interféromètre à fibre (12) mesure une différence de longueur de chemin entre la lumière réfléchie au niveau d'un miroir de référence et la lumière se déplaçant le long de la fibre de direction (35) vers et à partir de la surface (4) de l'objet tangible, et dans lequel
- le coupleur à trois voies (36) est agencé pour éliminer l'effet d'un rapport d'amplitude des composantes de lumière lors de la mesure de la différence de longueur de chemin.

2. Dispositif de mesure optique selon la revendication 1, dans lequel la sonde optique comporte une lentille (44) agencée pour guider la lumière vers la surface, et pour guider la lumière réfléchie en arrière vers l'interféromètre à fibre.

3. Dispositif de mesure optique selon l'une quelconque des revendications précédentes, dans lequel la sonde optique est fixée sur un dispositif de manipulation pour être mobile par rapport à l'objet.

4. Machine-outil pour la mise en forme de la surface d'un objet tangible, **caractérisée en ce que** la machine comporte un dispositif de mesure optique (1) selon l'une quelconque des revendications précédentes.

5. Machine-outil selon la revendication 4, dans laquelle la machine est une machine de tournage à diamant, un polissoir robot ou tout autre machine génératrice de la surface, destinée à un enlèvement de matière.

6. Machine-outil selon la revendication quatre, dans laquelle la machine est une imprimante ou tout autre machine génératrice de surface, destinée à un ajout de matériel.

7. Procédé pour mesurer la forme d'un objet tangible (2), comportant les étapes consistant à guider de la lumière vers une surface (4) de l'objet, et à recevoir de la lumière réfléchie de manière diffuse et non spéculaire par la surface, dans lequel la lumière est reçue par une fibre optique monomode, et la lumière reçue est guidée vers un interféromètre à fibre,
**caractérisé en ce que**
l'interféromètre à fibre (12) comporte une source de lumière cohérente (31), un circulateur (32) couplé à la source de lumière cohérente (31), un coupleur à trois voies (36) couplé au circulateur (32), un détecteur (33) couplé au circulateur (32), le circulateur (32) étant configuré pour empêcher la lumière provenant de la source de lumière cohérente (31) d'aller directement vers le détecteur (33), l'interféromètre à fibre (12) comportant en outre une fibre de référence (34) et une fibre de détection (35) couplées au coupleur à trois voies (36), le procédé comportant les étapes consistant à
- utiliser l'interféromètre à fibre (12) pour mesurer une différence de longueur de chemin entre la lumière réfléchie au niveau d'un miroir de référence et la lumière se déplaçant le long de la fibre de direction (35) vers et à partir de la surface (4) de l'objet tangible, et
- éliminer l'effet d'un rapport d'amplitude des composantes de lumière lors de la mesure de la différence de longueur de chemin en utilisant le coupleur à trois voies (36).

8. Procédé selon la revendication 7, dans lequel la fibre optique et l'objet sont déplacés l'un par rapport à l'autre.
